# Europäisches Patentamt

## European Patent Office

### Office européen des brevets

(19)

(11) Veröffentlichungsnummer: **0 039 847 B1**

(12) **EUROPÄISCHE PATENTSCHRIFT**

(45) Veröffentlichungstag der Patentschrift:
**07.01.87**

(51) Int. Cl.⁴: **B 29 C 51/08,** C 03 B 23/033, B 21 D 13/10

(21) Anmeldenummer: **81103298.6**

(22) Anmeldetag: **02.05.81**

(54) Verfahren zur Herstellung von eine Vielzahl ein- oder beidseitig vorstehender Profile aufweisenden Bahnen oder Platten aus thermoplastisch verformbarem Material.

(30) Priorität: **02.05.80 AU 3383/80**

(43) Veröffentlichungstag der Anmeldung:
**18.11.81 Patentblatt 81/46**

(45) Bekanntmachung des Hinweises auf die Patenterteilung:
**07.01.87 Patentblatt 87/2**

(84) Benannte Vertragsstaaten:
**AT BE CH DE FR GB IT LI LU NL SE**

(56) Entgegenhaltungen:
**DE - A - 1 479 294
DE - A - 2 747 686
FR - A - 2 062 461
FR - A - 2 124 903
FR - A - 2 162 034
FR - A - 2 196 229
US - A - 2 182 720**

(73) Patentinhaber: **Australian Applied Research Centre, 98 Nicholson Street, Abbotsford Victoria, 3067 (AU)**

(72) Erfinder: **Keith, Donald Georg, Mount Eliza, Victoria (AU)**

(74) Vertreter: **Krieger, Hans Jochen, Dr. et al, Rechtsanwälte KRIEGER . ROTHE . PINDER Gogrevestrasse 11-13, D-4000 Düsseldorf (DE)**

ACTORUM AG

## Beschreibung

Die Erfindung betrifft ein Verfahren und eine Vorrichtung zur Ausbildung einer Vielzahl hohler Profile an einer Bahn gemäss dem ersten Teil des Anspruchs 1 bzw. 5, wie sie z.B. die DE-A 2 341 737 zeigt.

Diese Ausbildung erfolgt im thermisch plastifizierten Zustand des Materials mit Hilfe von stiftförmigen Werkzeugen, wobei diese eine Temperatur aufweisen, die unterhalb der Temperatur des plastifizierten Materials liegt. Die stiftförmigen Werkzeuge verformen bzw. profilieren das plastifizierte Material durch einen Zieheffekt der solange anhält, bis durch Abkühlung bzw. Unterschreiten des thermischen Plastifizierungsbereichs Verfestigung des vorher weichen Materials eingetreten ist.

Solche Profile können beliebige, insbesondere aber pyramidenförmige, kegelstumpfförmige oder auch zylindrisch spitz auslaufende geometrische Formen aufweisen. Derartige profilierte Bahnen oder Platten (Noppenbahnen), die meistens in der Ebene der Profilspitzen durch eine plane Materialbahn abgedeckt und damit zusätzlich verstärkt werden, sind bereits in den verschiedensten Bereichen der Anwendungstechnik verwendet und vorgeschlagen worden. So findet man sie insbesondere in der Verpackungstechnik, beispielsweise im Behälterbau, als versteifende Unterlagen für zerbrechliche oder empfindliche Güter wie Obst, Eier, Ampullen, elektrotechnische Artikel (Glühbirnen), als Versteifungsmaterial für Kartonnagen, als Schall- und Temperatur-Isolatoren, im Bauwesen zur Dämmung von Wänden oder Dächern, im Flugzeug-, Karrosserie- oder Fussbodenbau, in der Solartechnik und vieles mehr.

In den DE-OS 2 258 513 und DE-A 2 341 737 wird vorgeschlagen, die Profilausbildung aus der Materialebene heraus zweiseitig durchzuführen, wobei meist abwechselnd obere und untere Profile hergestellt werden. Diese beidseitige «Noppung» führt zwar bereits zu einer erheblichen Verbesserung der physikalischen Eigenschaften der profilierten Endprodukte (Noppenbahnen). Die beiden bekannten Verfahren verwendete Technologie dagegen erlaubt nicht die technische Herstellung beidseitig profilierter Bahnen oder Platten unterschiedlicher Materialien mit beliebiger Profilart oder -grösse, mit kontrollierter Festigkeit im kontinuierlichen, ungestörten, keine Fehlchargen unterliegendem Betrieb.

Das Verfahren gemäss DE-OS 2 258 513 fordert bewusst die Einschränkung auf ein ganz bestimmtes Verhältnis von Profillänge (Noppenhöhe) zum Profildurchmesser an der Basis (Materialebene).

Es fordert weiter den Einsatz nur ganz spezifisch ausgebildeter Werkzeuge für den eigentlichen, die Profilausbildung bewirkenden Zieheffekt. Die Werkzeuge sollen als spitz zulaufende Nadeln vorliegen. Durch das geforderte Verhältnis von Profillänge zum Profildurchmesser an der Basis in Verbindung mit einer ebenfalls geforderten und damit eingeschränkten minimalen Oberfläche des die Profile an der Basis verbindenden Materials ist der Einsatzbereich derartiger profilierter Materialien in erheblichem Masse eingeschränkt und z.B. als Trägermaterial für grössere Einzelteile zerbrechlicher Güter wegen der äusserst dichten Noppenfolge (Profilfolge) kaum noch geeignet. Weiter besteht durch die geforderte Einhaltung eines Verhältnisses von Profillänge zum Basis-Profildurchmesser von «grösser als 2:1» bei der Ausbildung beidseitiger Profile die Gefahr einer erheblichen Wandstärkeverminderung der Profile bei vergleichsweise dicken Spitzen, wodurch die mechanische Stabilität der Profile derart herabgesetzt werden kann, dass – in Abhängigkeit vom eingesetzten Material – der Zusammenbruch einzelner Profile oder ganzer Profilgruppen unvermeidlich ist. Dass die gestellte Forderung nach Einhaltung des Verhältnis der Profillänge zum Profildurchmesser die Form der Profile in erheblichem Masse einschränkt und z.B. relativ breite oder grossflächige Profilenden oder kurze, gedrungene Profile mit kleinerer oder gleicher Profillänge als dem Profildurchmesser entsprechend überhaupt nicht mehr zulässt, versteht sich von selbst.

Es ist leicht einzusehen, dass bei doppelseitiger, eng aneinanderliegender Profilausbildung mit verdickten Spitzen und dem geforderten Verhältnis von Profillänge zum Profil-Basisdurchmesser eine Materialverdünnung beim Ziehvorgang nicht zu vermeiden ist.

Auch der Einsatz von ausschliesslich spitzen Stiften als Ziehwerkzeuge für die Profilausbildung erweist sich in erheblichem Masse als nachteilig. Zwar wird hierdurch eine punktförmige Abschrekkung und damit punktförmige Verdickung an der Berührungsstelle der kalten Spitzen mit der heissen Materialbahn erzielt, diese kann aber, wie die Praxis gezeigt hat, insbesondere bei Materialien mit engem Erweichungsbereich, wie z.B. Glasmasse, leicht zum Durchstoss der spitzen Werkzeuge durch das Material führen, so dass im laufenden Betrieb erhebliche Fehlchargen anfallen.

Neben diesen Einschränkungen haben die bekannten Verfahren die weiteren Nachteile, dass sie es nicht ohne umständliche Umrüstung erlauben, Materialien mit unterschiedlichem Erweichungsverhalten zu fahren. Eine Schrumpfung der Bahnbreite zu verhindern, eine ausreichende Zugfestigkeit – wenn gewünscht – der Noppenbahn in der Ebene senkrecht zur Laufrichtung zu erzielen und bei kontinuierlicher Erstellung glatte, fugenlose und wulstfreie kontinuierliche Bahnen zu erzielen.

Es hat sich gezeigt, dass für eine einwandfreie, betrieblich ungestörte, in der geometrischen Form der auszubildenden Profile (auch Noppen genannt) variable, die erheblichen Nachteile der bisher bekannt gewordenen Verfahren und deren Produkte, behebende Herstellung von Bahnen oder Platten der eingangs genannten Art ganz bestimmte Verfahrensparameter und deren Ineinanderwirken erforderlich sind. Die Erfindung wird in bezug auf das Verfahren im Anspruch 1 und in bezug auf eine Vorrichtung im Anspruch 5 angegeben.

Bevorzugt werden die Profile quer zur Materialbahn in fortlaufenden Reihen ausgebildet, wobei
diese – bei doppelseitiger Profilausbildung, was
der bevorzugten Form entspricht – abwechselnd
nach oben und unten ausgerichtet sind. Sie können auch zueinander versetzt sein, unterschiedliche Länge aufweisen, oder es können lange und
weniger lange Profile abwechselnd einzeln oder
in Gruppen ausgebildet werden. Schliesslich sind
auch Abweichungen – wenn auch nur in geringem
Masse – von der senkrechten Ausrichtung der
Profile zur Materialebene möglich.

Obwohl bei dem erfindungsgemässen Verfahren praktisch alle geometrischen Formen der profilbildenden Werkzeuge verwendet werden können, und einschränkende Auflagen wie etwa bei
der DE-OS 2 258 513 nicht gegeben sind, haben
sich stiftförmige Werkzeuge zylindrischer Konfiguration mit flacher, ebener Endfläche, jedoch
beliebigem äusserem Querschnitt als besonders
geeignet erwiesen. Dabei können diese Werkzeugstifte an den Endflächen, also an denjenigen
Flächen, durch die der profilbildende Zieheffekt
bewirkt wird, eine konkave Einbuchtung aufweisen, etwa in der Form einer Halbkugel oder eines
Kreisabschnitts. Schliesslich sind auch solche
Werkzeugstifte besonders wirksam, deren Endbereiche am äussersten Umfang abgeschrägt sind.

Es versteht sich, dass Einzelstufen des Verfahrens gewisse Abänderungen, betriebliche Anpassungen oder noch zweckmässigere Ausbildungen
erfahren können. So ist es z.B. möglich, anstelle
einer bereits vorgefertigten Materialbahn, z.B. einer Folie, einen Extruder zu verwenden, der sowohl der Erzeugung der Ausgangsmaterialbahn
als auch deren Erhitzung auf den Bereich ausreichender Plastifizierung dient.

Der Verlauf der gleichzeitigen Vertikal- und Horizontalbewegung der stiftförmigen Werkzeuge
von Beginn des ersten Berührens mit der plastizierten Materialbahn bis zum Erreichen der äussersten Profillänge, also im gesamten Bereich der
sogenannten Verformungszone, entspricht einer
schiefen Ebene, die in bestimmten Fällen einen
eher parabelförmigen Verlauf annehmen kann,
(wenn die Eindringgeschwindigkeit im Zeitablauf
variiert werden soll) der mit der ständig abnehmenden Vertikalbewegung bis zum Erreichen des
Nullpunktes (äusserste Profillänge) in die Horizontale der Bahnebene übergeht.

Der Verlauf der gleichzeitigen Vertikal- und Horizontalbewegung der stiftförmigen Werkzeuge in
der Verformungszone, ob als ungekrümmte schiefe Ebene oder als parabelförmige Annäherung an
den Nullpunkt der Vertikalbewegung, ist eine
Funktion der Eigenschaften des zu verformenden
Materials, insbesondere dessen temperaturabhängigem Plastifizierverhaltens, wobei für hochviskose, nur im engen Temperaturbereich plastifizierbare Materialien wie z.B. Gläser der parabelförmige Formgebungsverlauf günstiger erscheint,
während sich für niedrigviskose Massen wie Polyolefine und ähnliche ein glatter, ungekrümmter,
der schiefen Ebene entsprechender Formgebungsverlauf eher anbietet.

Von entscheidender Bedeutung für eine einwandfreie, ungehinderte und keinen betrieblichen
Störungen unterworfene ein- oder beidseitige
Ausbildung der Profile aus der Bahn des thermisch plastifizierten Materials ist eine genaue Abstimmung der Vertikal- und Horizontalbewegung
(Geschwindigkeit) der Werkzeuge relativ zur Materialbahn, die Länge der Verformungszone, die
Länge der Kühl- und Beruhigungszone, die frühzeitige Vertikalausrichtung der Werkzeuge senkrecht zur horizontal bewegten Materialebene vor
Erreichen der ersten Berührung sowie – als Materialkonstante des Endproduktes zu werten – bei
beidseitiger Profilausbildung der Abstand der der
Verformungszone gegenüberstehenden Werkzeuge.

Die Werkzeuge müssen bei Beginn der Materialverformung ihre insbesondere senkrechte Position mit Bezug zur Materialbahnebene eingenommen haben und dürfen diese im Verlauf der Profilausbildung bis zum Ende der Kühl- und Beruhigungszone nicht verändern.

Die Vertikalbewegung der Werkzeuge kann innerhalb der Verformungszone leicht variabel sein
mit der grössten Geschwindigkeit beim erstmaligen Berühren der Materialbahn und dem Wert
Null beim Erreichen der äussersten Profillänge
(parabelförmiger Verlauf). Sie kann aber auch mit
konstantem Wert abnehmen unter Ausbildung der
bereits definierten schiefen Ebene, deren Scheitelpunkt mit der Materialbahnebene (Nullwert)
wiederum die äusserste Profillänge darstellt.

Alle Bewegungsabläufe, d.h. die Vertikal- und
Horizontalbewegung der Werkzeuge, die Bewegung der Materialbahn, die Einstellung des Abstands der Werkzeuge im Verformungsbereich,
die Herausnahme der Stifte und damit der Werkzeuge aus der profilierten Bahn, die Rückführung
der Werkzeuge zum Ausgangspunkt der Verformung und die absolute Ausrichtung der Werkzeuge zur Materialbahn zum Beginn des Formgebungsvorgangs müssen stufenlos regel- und einstellbar sein, wenn alle erfindungsgemässen Produkte gefahren werden sollen und unterschiedliche Dicken und Strukturen gefordert werden.

Es ist dafür Sorge zu tragen, dass die Verformungswerkzeuge im Bereich der Werkzeugausrichtung senkrecht zur Materialbahn, in der Verformungszone, in der Kühl- und Beruhigungszone
und im Bereich der Werkzeugabnahme fugenlos
aneinander liegen während der Rücktransport genügend Spiel zwischen den Werkzeugen besitzen
muss, um die frühzeitige Ausrichtung senkrecht
zur Materialbahn zu erlauben.

Das neue Verfahren bietet folgende, die Anwendungstechnik insgesamt in erheblichem Umfang
bereichernde Vorteile: Es ist sowohl diskontinuierlicher als auch kontinuierlicher Betrieb möglich, wobei letzterer bevorzugt ist. Die stiftförmigen Werkzeuge sind – mit ihren Trageelementen
– jederzeit und stufenlos auswechselbar. Durch
die Einstellung der verschiedenen Bewegungsabläufe zueinander kommt es weder zur Ausbildung
von unerwünschten «Nähten» zwischen den Begrenzungen benachbarter Werkzeuge noch zu Fehlverformungen. Der Zugdruck zur Ausbildung der Profile aus dem erweichten Material wird nur in Richtung der Profile wirksam. Andere Druckeinflüsse, die z.B. zu Erweiterungen des Profilquerschnitts oder sogar zum Zerstören der Profile noch während des Verformungsvorgangs führen können, sind völlig ausgeschlossen. Der Verbleib der stiftförmigen Werkzeuge in den Profilen beim Durchlaufen der gesamten Kühl- und Beruhigungszone hat die Ausbildung stabiler, konfigurationsgerechter, verfestigter Profile zur Folge.

Das Verfahren ist praktisch anwendbar auf alle thermisch plastifizierbaren Materialien. Hierzu gehört die gesamte Klasse einschlägiger Kunststoffe homo- oder copolymerer Art, wie Vinylpolymere und entsprechende Mischpolymerisate, Polyolefine, Polyamide, Polynitrile, Polycyanate und -methacrylate, synthetischer Kautschuk und verwandte Produkte. Weiter ist das Verfahren anwendbar auf plastifizierbare Cellulosederivate. Geeignet sind auch gewisse Gläser, einige keramische Materialien und selbst thermisch verformbare Metalle und Metallegierungen.

Auch Nahrungsmittel wie Folien oder Platten aus Zucker, Schokolade und ähnliche können, unter gewissen Voraussetzungen, durch das neue Verfahren profiliert werden. Es versteht sich, dass mit dieser beispielhaften Aufzählung die Materialvielfalt nicht erschöpft ist. Die Länge der Profile, ihr Basisdurchmesser oder -querschnitt, der Grad der eventuellen Verjüngung zur Spitze, die Materialstärke der fertigen Profile, die Grösse (Fläche) des Verbunds an der Profilbasis, der geometrischen Habitus, die Reihenfolge von Profilen verschiedener Konfigurationen und Länge usw. können durch die Art der stiftförmigen Werkzeuge, die Ziehtiefe der stiftförmigen Werkzeuge, den Abstand der gegeneinander gerichteten Werkzeuge in der Verformungszone, die Länge der Verformungszone und die Dicke des eingespeisten thermisch plastifizierbaren Materials beliebig variiert werden.

Hierdurch ergibt sich eine Vielzahl möglicher Profilkonfigurationen bzw. profilierter Materialfertigbahnen, die in fast allen Bereichen der Technologie Eingang finden können.

Das Verfahren wird nachfolgend näher erläutert, wobei auf eine Vorrichtung Bezug genommen wird, die sich zur Durchführung des Verfahrens als besonders geeignet erwiesen hat.

Die der Verfahrensbeschreibung dienenden und die Arbeitsweise und den Aufbau der Vorrichtung definierenden Figuren zeigen:

Fig. 1 den Aufbau einer Gesamtanlage;

Fig. 2 die gleiche Anlage im Schnitt und in Draufsicht, wobei Einzelteile der Anlage bzw. der Vorrichtung detaillierter angegeben sind;

Fig. 3 in schematischer Darstellung die Vorgänge bei der Profilausbildung;

Fig. 4 die Ausbildung bzw. das Verhältnis des Ein- (a) und Ausgangs-Winkels (b) zueinander und die Führung der Werkzeuge als ungekrümmte schiefe Ebene;

Fig. 5 den Eingang der Werkzeuge als parabelförmiger Verlauf;

Fig. 6 im Schnitt die Position gegenüberstehender Werkzeuge sowie die fertig ausgebildeten Profile;

Fig. 7 in Draufsicht eine fertige, beidseitig profilierte Materialbahn gemäss Fig. 6;

Fig. 8 im Schnitt ein Trageelement (Tragekörper) zur Aufnahme eines Satzes stiftförmiger Werkzeuge;

Fig. 9 eine abgewandelte Form des Trageelements; Figuren 10, 11, 12 und 13 mögliche Ausführungsformen der Endplatten der Trageelemente;

Fig. 14 beispielhafte Möglichkeiten der Profillängenausbildung (Stärke der fertigen, beidseitig profilierten Bahn) und deren Abhängigkeit von der Verformungsstrecke;

Fig. 15 beispielhafte Ausführungsformen von besonders geeigneten stiftförmigen Werkzeugen.

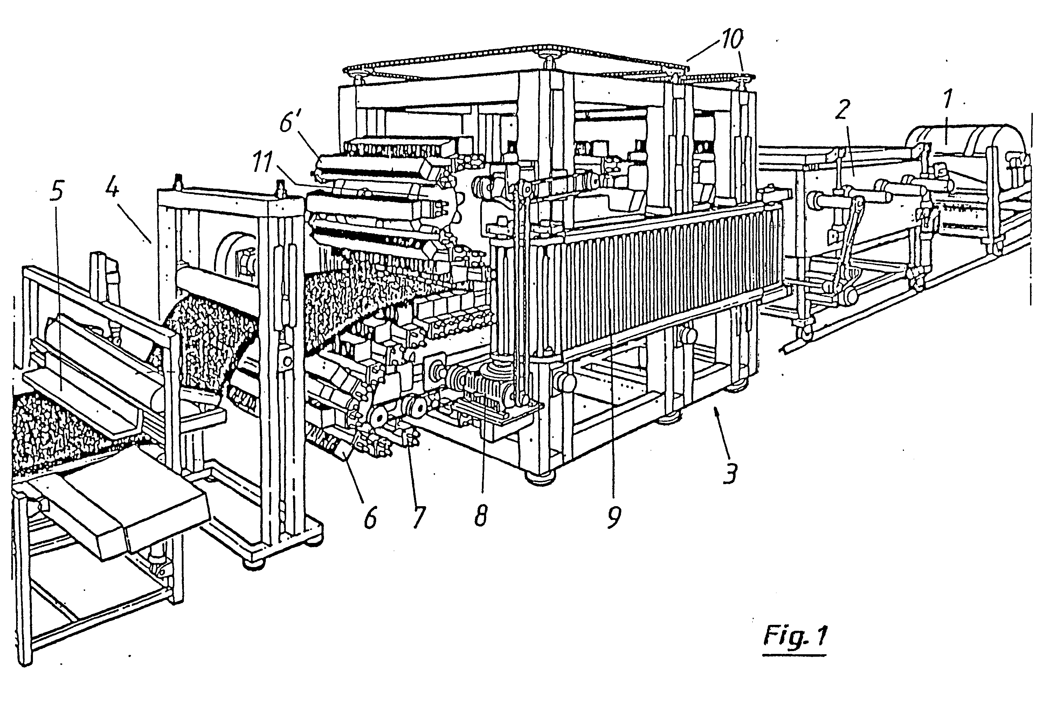

Gemäss Fig. 1 besteht die Gesamtanlage aus einer Rollenabnahme (1) für die verformbare Folie oder Bahn aus thermisch plastifizierbarem Material, einer Einrichtung (2) zur Aufheizung des Materials in oder oberhalb des Plastifizierungsbereichs, der eigentlichen Formgebungseinrichtung (3), bestehend aus – nicht sichtbar – Werkzeugausrichtungszone, Verformungszone sowie Kühl- und Beruhigungszone, dem gemeinsamen Maschinenantrieb mit Getrieben (8), Walzenstuhl (4) und Produktabnahmetisch (5), der auch als Schneidestation für die Gewinnung von Platten eingerichtet sein kann.

Es versteht sich, dass die Rollenabnahme (1), die Heizeinrichtung (2), der Walzenstuhl (4) oder Abnahmetisch (5) beliebiger Art sein können. So kann beispielsweise das Material direkt aus einem Extruder heraus vorgebildet werden, wobei auf die Rollenabnahme (1) verzichtet werden kann. Auch kann bei der Verarbeitung von Gläsern usw. der Maschine (3) ein Glasofen direkt vorgeschaltet sein. Diese Gestaltungsmöglichkeiten gehören zum allgemeinen technischen Wissen des Fachmanns und richten sich nach der Art des zu verarbeitenden Materials.

So hat es sich als zweckmässig erwiesen, zwischen Heizeinrichtung (2) und der eigentlichen Formgebung (3) ein weiteres Rollensystem (ggf. beheizt) zur ebenen Ausrichtung der Materialbahn einzuschalten.

Fig. 1 zeigt weiter die Anordnung der vertikal ausgerichteten und im Kreis mit vertikaler Achse geführten Bewegungselemente (9), die gemeinsam angetriebenen Enden der höhen- und tiefenverstellbaren Spindeln (10), die kasten- oder plattenförmigen Tragekörper (6, 6') zur Aufnahme der stiftförmigen Werkzeuge, Mitnehmerkränze (11) sowie die beidseitig über die Materialbahn hinausreichenden, vierfach angeordneten zylinderstumpfförmigen Bolzen oder Nocken (7), in die die insbesondere stabförmigen Bewegungselemente (9) eingreifen. Über die zusammenwirkenden, stufenlos veränderlichen Getriebe (8) kann die Geschwindigkeit der Mitnehmerkränze (11), die Geschwindigkeit der Bewegungselemente (9) sowie die Höheneinstellung der Spindeln (10) beliebig verändert und der Materialbahn bzw. deren Durchgangsgeschwindigkeit angepasst werden, wobei es vorteilhaft ist, die Mitnehmerkränze (11) die die Werkzeugträger in Mitnehmerbereich erfassen mit leicht erhöhter Kraft zu fahren, um eine nahtlose Pressung der Werkzeuge zu erreichen.

Wie aus Fig. 1 weiter ersichtlich ist, sind die Werkzeuge im Bereich der Formgebung und Kühlung bzw. Beruhigung dicht nebeneinander gepackt, so dass eine übergangsfreie Profilausbildung erfolgt. Im Augenblick der Abhebung, d.h. des Austritts aus den erstarrten Profilen, erhöht sich der Abstand der Werkzeuge bzw. Werkzeugtragekörper (6, 6'), sie werden von den Mitnehmerkränzen (11) ergriffen und bei schnellster Rückbewegung zum Materialeingang zurückgeführt. Vor Erreichen der Mitnehmerkränze (11) verlassen die Werkzeugtragekörper (6, 6') selbstverständlich den Einflussbereich der vertikalen Bewegungselemente (9).

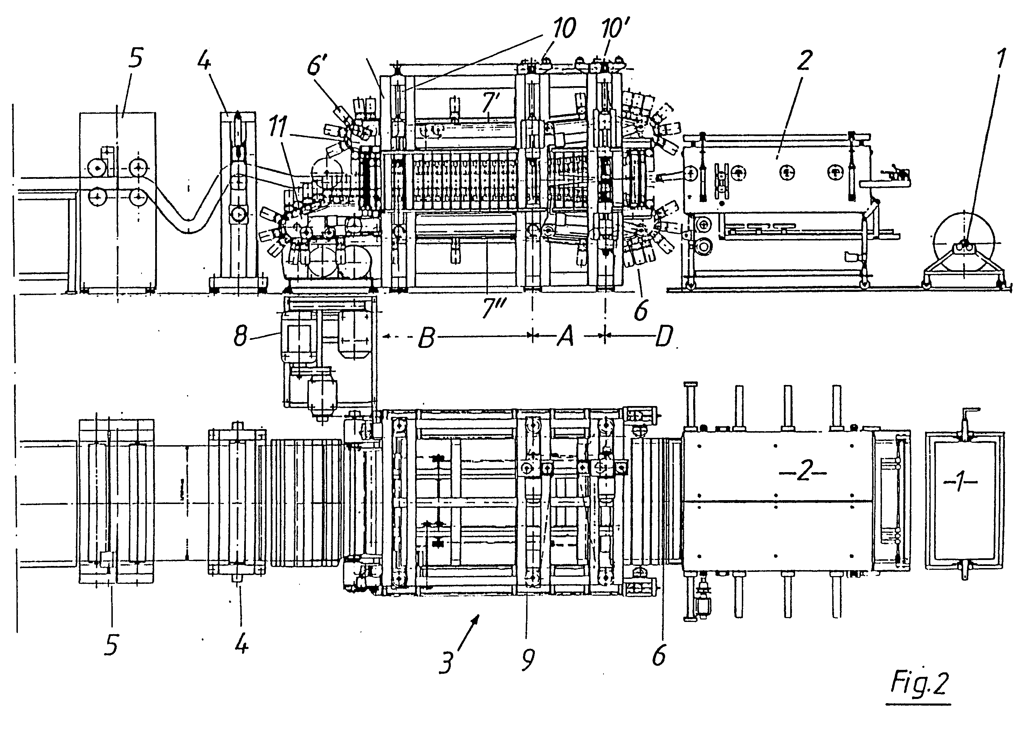

Die in Fig. 2 dargestellte Anlage entspricht derjenigen gemäss Fig. 1. Es ist ein detaillierter Seitenaufbau und eine Draufsicht dargestellt, wobei es sich auch hier um eine Vorrichtung für beidseitige Ausbildung von Profilen aus der Materialbahn handelt. Wie ersichtlich, werden die Tragekörper (6, 6') über obere und untere Laufschienen (7', 7'') im Kreis geführt, wobei sich unter dem Einfluss der gegeneinander stehenden, an den Tragekörpern (6, 6') gehaltenen stiftförmigen Werkzeuge die Materialbahn in der Horizontalebene (im dargestellten System von rechts nach links) bewegt. Man erkennt aus Fig. 2 den Bereich der Werkzeugausrichtungszone (D) – Ausrichtung in die Vertikale und Ausbildung einer dichten, spaltfreien Zuordnung zueinander – die eigentliche Formgebungszone (A), die Kühl- und Beruhigungszone (B) und – nicht bezeichnet – die Werkzeugabnahmezone am linken Ende der Maschine (3).

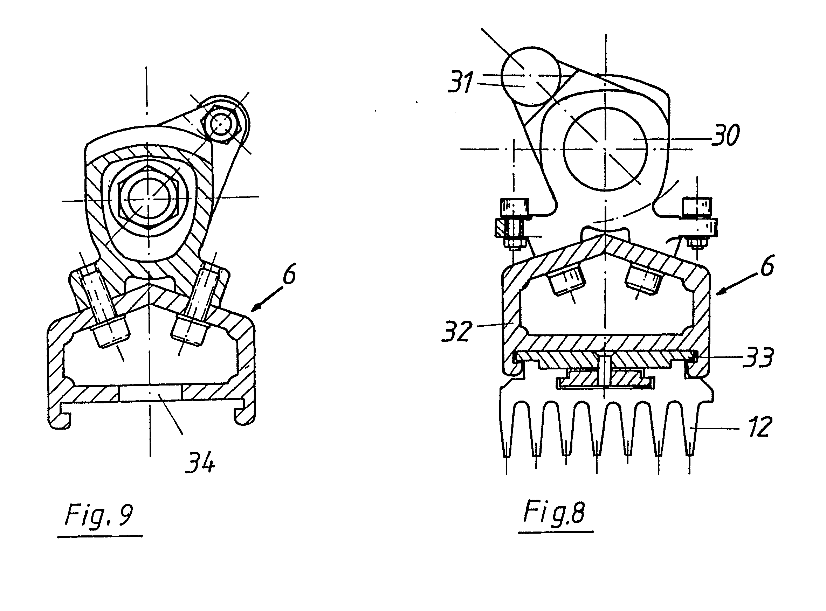

Stabförmige Bewegungselemente (9) auf jeder Seite der Maschine (3) bestimmen die genaue (vertikale) Positionierung der Werkzeug-Tragekörper (6, 6') im Zusammenwirken mit den, mit erhöhter Kraft laufenden und eine Rutschkupplung aufweisenden Mitnehmerkränze (11) und erfassen diese, sobald sie von den Mitnehmerkränzen herangeschoben worden sind, die am Führungsstück 30 gem. Fig. 8 angreifen.

Wie bereits gesagt, kann der Abstand der Werkzeuge im Formgebungsbereich (A) über die Spindeln (10) eingestellt werden. Damit wird auch die Tiefe der Profilausbildung unabhängig von der Länge der stiftförmigen Werkzeuge variabel. Dies bedeutet, dass mit einem Werkzeug bestimmter Länge auch Profile mit kürzerer Länge (als das Werkzeug) ausgebildet werden können.

Es ist dabei sogar möglich, während des Formgebungsvorgangs über die Spindeln (10) den Abstand der Werkzeuge so zu verändern, dass Profilreihen mit grosser und kleiner Länge bei unveränderter Werkzeuglänge abwechseln können.

Schliesslich zeigt Fig. 2, dass mit Hilfe der Spindeln (10) auch die Länge der Formgebungszone (A) selbst, sowie der Eingangswinkel zwischen oberer und unterer Werkzeugbahn verändert werden können. Diese Massnahme ist immer dann notwendig, wenn das zu verformende Material aufgrund seines temperaturabhängigen Viskositäts- bzw. Plastifizierverhaltens z.B. eine extrem lange Formgebungszone (A) benötigt oder die in (D) senkrecht zur Materialbahn ausgerichteten Werkzeuge sehr vorsichtig, d.h. z.B. mit verminderter Zugkraft auf das Material einwirken sollen.

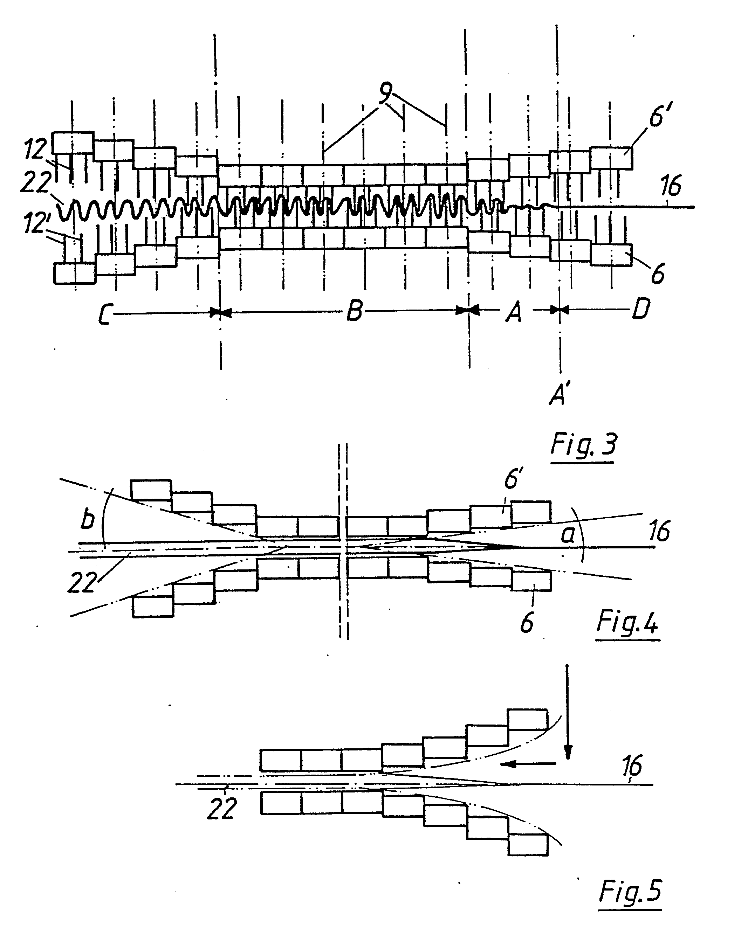

Fig. 3 zeigt in mehr schematischer Darstellung die Vorgänge innerhalb einer Maschine mit beidseitiger Profilausbildung aus der thermisch erweichten Materialbahn (16).

Nach der schnellen Rückführung der Werkzeug-Tragekörper (6, 6') vom (linken) Maschinenende zur erneuten Einwirkung auf die Materialbahn werden sie zunächst mit Hilfe der stabförmigen Bewegungselemente (9), vergl. Fig. 1 und 2, bei gleichzeitiger Horizontal- und Vertikalbewegung senkrecht zur Materialbahn positioniert (Zone D) und treten anschliessend bei (A') in die Formgebungszone (A) ein. In dieser verläuft der Ziehefekt zur Ausbildung der Profile (22) asymptotisch, bis beim Übergang nach (B) die Vertikalbewegung den Wert Null erreicht hat. Nach endgültiger Verfestigung in der Kühl- und Beruhigungszone (B) erfolgt die Abhebung der Werkzeuge (Stifte 12, 12'), wobei der hier beschriebene Ausgangswinkel (b) erheblich grösser ist als der Eingangswinkel (a) (Fig. 4).

Innerhalb der Formgebungszone (A) kann der Bewegungsablauf der Werkzeuge einer ungekrümmten schiefen Ebene gleichen, er kann aber auch parabelförmigen Charakter aufweisen (Fig. 5).

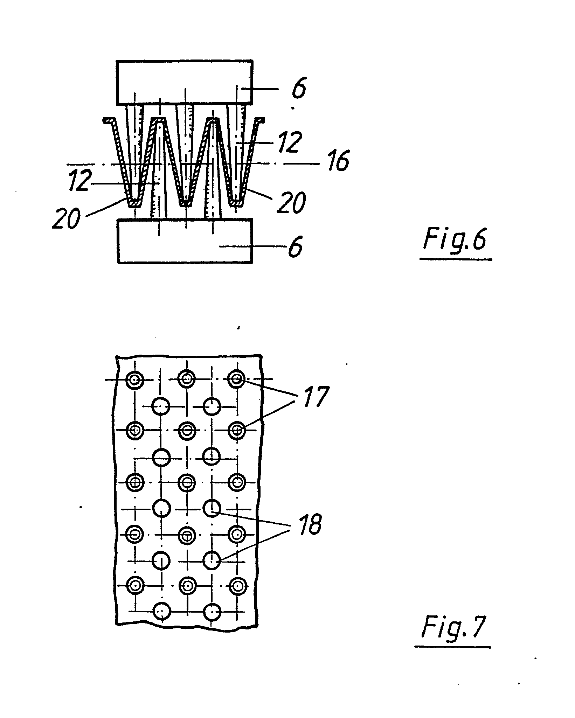

Fig. 6 zeigt im Schnitt die Position gegenüberstehender Werkzeug-Tragekörper (6) und der stiftförmigen Werkzeuge (12) während oder am Ende des Formgebungsvorgangs. Die Materialebene (16) ist praktisch nicht mehr vorhanden. Der Zieheffekt der Stifte hat zu einer gleichmässigen Profilierung geführt (20).

In der Draufsicht bietet sich die Bahn als eine Folge von aufwärts (17) und abwärts (18) gerichteten Profilen an (Fig. 7). Eine bevorzugte Ausführungsform eines Werkzeugtragekörpers (6) mit eingesetztem kammförmigen Satz stiftförmiger Werkzeuge (12) zeigt Fig. 8. Das Trageelement endet in Zapfen oder Lager (30) mit Mitnehmernocken (31), die von den Laufschienen (7', 7''), vergl. Fig. 2, gehalten werden und, eingespannt in Zwangswege in der Verfügungszone eine verfahrensgemässen Hoch- bzw. Herunterführung der Werkzeuge absolut sicher gewährleisten. Werkzeug-Befestigungselemente (33) im unteren Rahmenbereich (32) der Trageelemente (6) sind so gestaltet, dass sie ein leichtes Auswechseln der stiftförmigen Werkzeuge (12) erlauben.

Fig. 9 zeigt eine etwas abgewandelte Form der Werkzeug-Trageelemente (6). Hierbei erfolgt die Befestigung eines Satzes stiftförmiger Werkzeuge mittig bei (34) im Rahmenbereich (32).

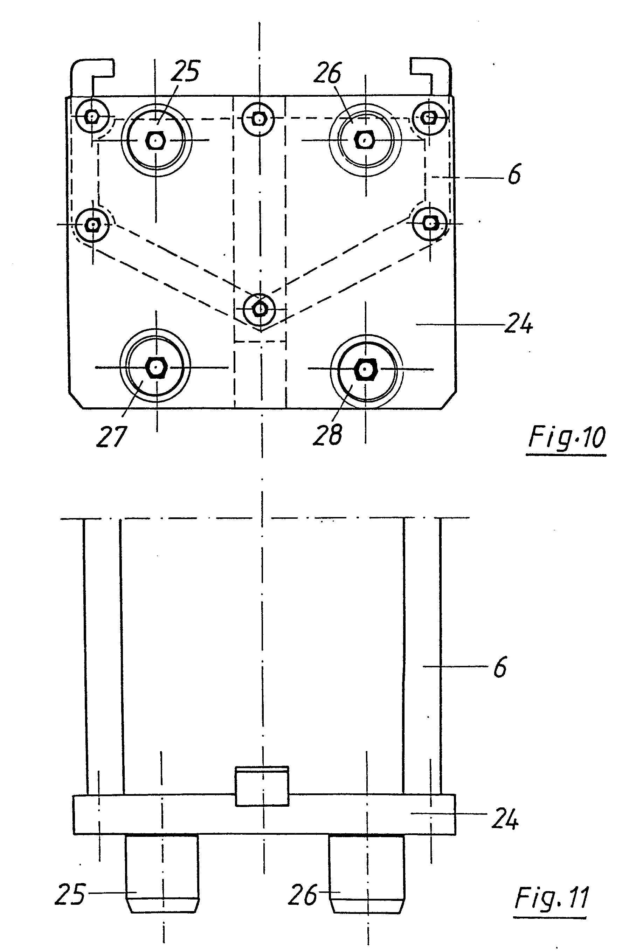

Die Endplatten (24) der Werkzeug-Tragekörper (6) tragen gemäss Fig. 10 und 11 nocken- oder bolzenförmige Elemente (25, 26, 27, 28) in Viereckform zueinander angeordnet, zwischen denen die stabförmigen Bewegungselemente (9), vergl. Fig. 2, eingreifen und so den Horizontaltransport und die Vertikalausrichtung der stiftförmigen Werkzeuge bewirken.

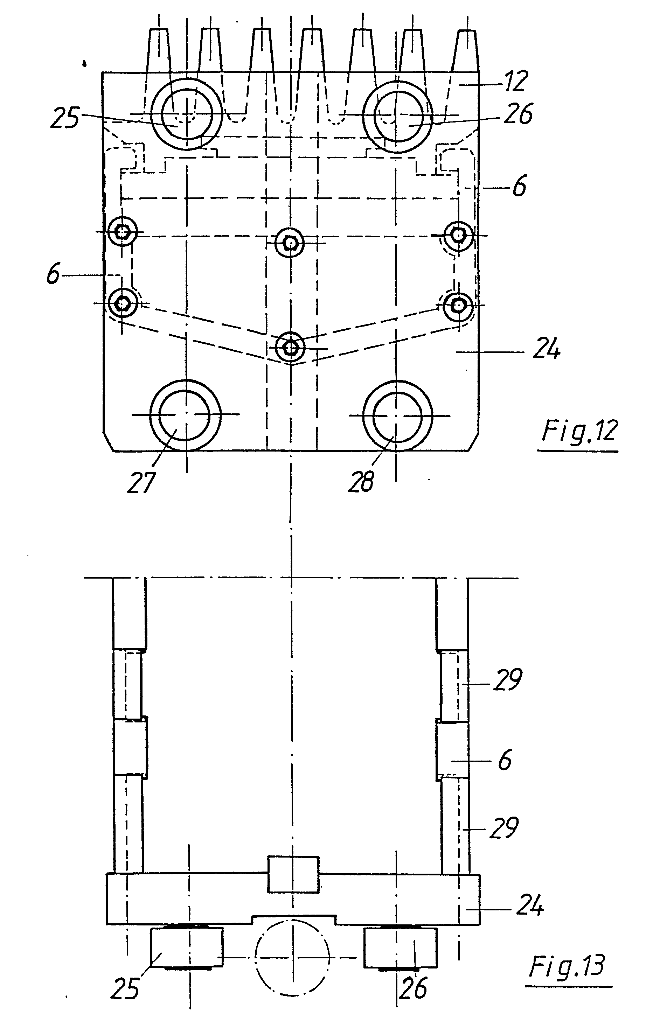

Eine andere Ausführungsform der Endplatten (24) deckt die Tragekörper (6) gemäss Fig. 12 und 13 völlig ab, ebenso ist der dargestellte kammförmige Satz stiftförmiger Werkzeuge (12) durch die Endplatten (24) teilweise abgedeckt.

Durch Verjüngung (29) in den Tragekörpern (6), die als eine Art Bayonnetverschluss wirken, rasten die Werkzeuge ein und können seitlich nicht herausgeschoben werden. Ein vergrösserter vertikaler Abstand zwischen oberen (25, 26) und unteren (27, 28) bolzenförmigen Elementen führt gleichzeitig zu einer verbesserten Stabilität zwischen Tragekörper-Endplatte (6) und dem jeweils eingesetzten stabförmigen Bewegungselement (9), siehe Fig. 2. Auch kann mit dieser Art der Endplatten die Länge der stabförmigen Bewegungselemente (9) vermindert werden.

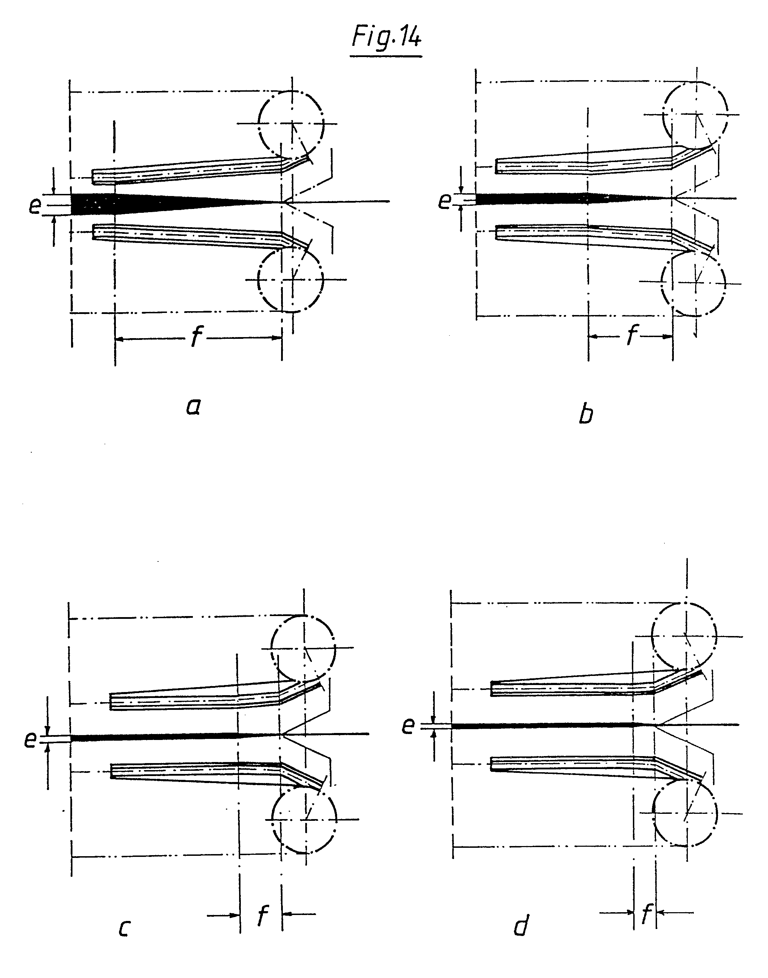

Aus Fig. 14 gehen beispielhafte Möglichkeiten der Ausbildung einer vorbestimmten und definierten Profillänge (= Stärke (e) der erhaltenen beidseitig profilierten fertigen Materialbahn) in Abhängigkeit von der Länge der Verformungszone bei gleichem Material und gleicher Länge der stiftförmigen Werkzeuge hervor.

So benötigt das Produkt nach Fig. 14 a z.B. für eine Produktstärke von (e) = 100 mm eine Verformungsstrecke von (f) = ca. 800 mm. Mit abnehmender Produktstärke z.B. auf (e) = 50 mm (Fig. 14 b) verringert sich die Länge der Verformungsstrecke auf (f) = 400 mm, sie wird somit um 50% kürzer. Hieraus geht bereits ein mathematischer Zusammenhang zwischen Produktstärke (e) und der Länge der Verformungsstrecke (f) hervor, wobei jedoch die Materialeigenschaften (Viskosität, Temperaturbereich der Plastifizierung, thermische Stabilität des Materials usw.) als ändernde Varianten auftreten.

Der weitere Verlauf der abnehmenden Produktstärke (e) auf 25 mm (Fig. 14 c) verringert die Verformungsstrecke (f) auf 200 mm und schliesslich sind gemäss Fig. 14 d für eine Produktstärke von ca. 4 mm nur noch 100 mm Verformungsstrecke (f) erforderlich.

Dieser hier beispielhaft wiedergegebene Vorgang wurde mit gleichen Werkzeugen bei beidseitiger Profilausbildung an Polyurethan-Copolymeren ermittelt, wobei ein kontinuierlicher, eine Bahnbreite von 1000 mm ausbildender Prozess zugrunde lag.

Die Änderung bzw. Anpassung der Verformungsstrecke (f in Fig. 14) kann über die Einstellung der gegenüberstehenden Werkzeuge mit Hilfe der Spindeln der Maschine, wodurch der Abstand der in ihrer Länge unveränderten stiftförmigen Werkzeuge variiert wurde, erfolgen. Es ist aber auch möglich die Führungsstücke auszuwechseln.

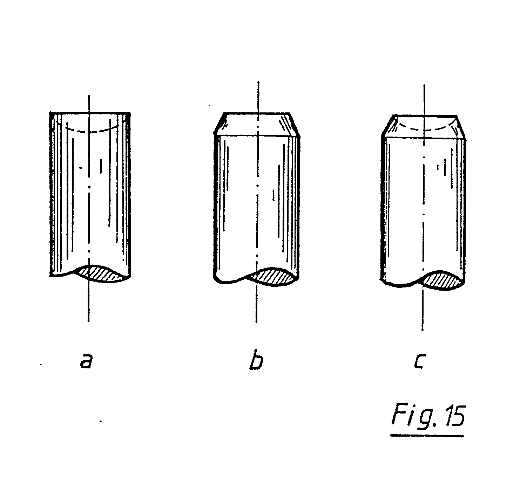

Es sei schliesslich noch auf eine besonders günstige Art der stiftförmigen Werkzeuge verwiesen, wie sie schematisch in Fig. 15 dargestellt sind.

Während glatte, stiftförmige Ziehwerkzeuge etwa in Ablehnung an Fig. 6 in Abhängigkeit vom eingesetzten Material durchaus zu brauchbaren Ergebnissen führen können, kann es gelegentlich von Vorteil sein, die flachen Enden halbkugelförmig oder schalenförmig nach innen konkav auszubilden (Fig. 15 a). Hierdurch wird weniger kalte Masse mit (Erstarrung) dem zu plastifizierenden Material bei der ersten Berührung mit den kalten Stiften in Kontakt gebracht, so dass der Zieheffekt begünstigt, die Stabilität der Profile während des Verformungsvorgangs erhöht, und ein Erstarrungswulst vermieden wird.

Fig. 15 b zeigt eine andere Form der Stiftenden, wobei durch die Abschrägung ein gelegentlich mögliches Abreissen des plastischen Materialfilms an der Spitze des stiftförmigen Werkzeugs vermieden werden kann.

Optimale Eigenschaften weisen solche stiftförmigen Werkzeuge auf, deren Enden gemäss Fig. 15 c sowohl eine Abschrägung nach Fig. 15 b als auch eine konkave Endflächenausbildung gemäss Fig. 15 a aufweisen. Durch diese Konfiguration werden Defekte des Materials bei der Profilausbildung und im Verlaufe des Verformungs- und anschliessenden Verfestigungsvorgangs praktisch völlig ausgeschlossen.

## Patentansprüche

1. Verfahren zur Ausbildung einer Vielzahl hohler, an der Basis miteinander im Verbund stehender Profile (22) an einer Bahn (16) aus Material mit thermoplastischem Erweichungsverhalten, wobei das Material in vertikaler Richtung zur Materialebene geführten stiftförmigen Werkzeugen (12, 12') ausgesetzt wird, unter Verwendung einer Einrichtung (2) zur Erwärmung des Materials auf die Temperatur ausreichender Plastifizierbarkeit, und unter Einsatz von oberen und/oder unteren, durch Antriebselemente im Kreis geführter Mitnahmeeinrichtungen (7', 7'', 9, 11) für eine Vielzahl auswechselbarer, der Bahnbreite angepasster, beidendig von den Mitnahmeeinrichtungen über endseitig und unterhalb angebrachter Stütz- und Rollenelemente erfassbarer und bewegter kasten- oder plattenförmiger Tragekörper (6, 6') zur Aufnahme einer Vielzahl stiftförmiger Verformungswerkzeuge (12, 12'), dadurch gekennzeichnet, dass die Tragekörper (6, 6') beidseitig vorstehende, insbesondere zylinderstumpfförmige Lager, Nocken oder Bolzen (7, 25, 26, 27, 28) aufweisen, in die zwecks paralleler Ausrichtung der unter Druck gegeneinander operierenden bzw. sich vertikal und horizontal einander nähernden Tragekörpern (6, 6') um vertikale Drehachsen bewegte, stabförmige Bewegungselemente (9) eingreifen, die der horizontalen Weiterbewegung der Tragekörper (6, 6') bis zu deren Eingreifen in einen Mitnehmerkranz (11) dienen, durch den die Tragekörper (6, 6') unter Richtungsänderung in die Arbeitsstellung am Materialeingang (D) gebracht werden, und unter Einsatz mehrerer Spindeln (10) zur Einstellung der Eindringtiefe der Verformungswerkzeuge insbesondere im Bereich der Materialbahnein- und ableitungszonen (D, C), wobei die Geschwindigkeiten der Antriebselemente für die Rückführungseinrichtungen (7', 7''), die stabförmigen Bewegungselemente (9) und die Mitnehmerkränze (11), sowie für die stufenlos arbeitenden Spindeln (10) aufeinander abgestimmt und geregelt werden.

2. Verfahren nach Anspruch 1, dadurch gekennzeichnet, dass die Grösse des Eingangswinkels 5 bis 45°, insbes. 20 bis 30° beträgt.

3. Verfahren nach Ansprüchen 1–2, dadurch gekennzeichnet, dass die Werkzeuge gleichzeitig und beidseitig auf das mittig geführte, unter Vorspannung stehende Material einwirken.

4. Verfahren nach Ansprüchen 1–2, dadurch gekennzeichnet, dass zur Ausbildung einer Vielzahl einseitig aus der Materialbahn geformter Profile die Bahn einseitig über ein stützendes, vielmaschiges Gitter, Netz oder Lochblech mit mindestens der Zahl der stiftförmigen Werkzeuge entsprechender Maschen- oder Lochzahl geführt wird, und die stiftförmigen Werkzeuge auf das Material von oben nach unten oder von unten nach oben einwirken.

5. Vorrichtung zur Ausbildung einer Vielzahl hohler, an der Basis miteinander im Verbund stehender Profile (22) an einer Bahn (16) aus Material mit thermoplastischem Erweichungsverhalten, wobei das Material in vertikaler Richtung zur Materialebene geführten stiftförmigen Werkzeugen (12, 12') ausgesetzt wird, mit einer Einrichtung (2) zur Erwärmung des Materials auf die Temperatur ausreichender Plastifizierbarkeit, mit oberen und/oder unteren, durch Antriebselemente im Kreis geführten Mitnahmeeinrichtungen (7', 7'', 9, 11) für eine Vielzahl auswechselbarer, der Bahnbreite angepasster, beidendig von den Mitnahmeeinrichtungen über endseitig und unterhalb angebrachter Stütz- und Rollenelemente erfassbarer und bewegter kasten- oder plattenförmiger Tragekörper (6, 6') zur Aufnahme einer Vielzahl stiftförmiger Verformungswerkzeuge (12, 12'), dadurch gekennzeichnet, dass die Tragekörper (6, 6') beidseitig vorstehende, insbesondere zylinderstumpfförmige Lager, Nocken oder Bolzen (7, 25, 26, 27, 28) aufweisen, in die zwecks paralleler Ausrichtung der unter Druck gegeneinander operierenden bzw. sich vertikal und horizontal einander nähernden Tragekörpern (6, 6') um vertikale Drehachsen bewegte, stabförmige Bewegungselemente (9) eingreifen, die der horizontalen Weiterbewegung der Tragekörper (6, 6') bis zu deren Eingreifen in einen Mitnehmerkranz (11) dienen, durch den die Tragekörper (6, 6') unter Richtungsänderung in die Arbeitsstellung am Materialeingang (D) gebracht werden, und mit mehreren Spindeln (10) zur Einstellung der Eindringtiefe der Verformungswerkzeuge (12, 12') insbesondere im Bereich der Materialbahnein- und ableitungszonen (D, C), wobei die Geschwindigkeiten der Antriebselemente für die Rückführungseinrichtungen (7, 7'), die stabförmigen Bewegungselemente (9), und die Mitnehmerkränze (11), sowie für die Drehung der stufenlos arbeitenden Spindeln (10) aufeinander abgestimmt und geregelt werden können.

6. Vorrichtung nach Anspruch 5, dadurch gekennzeichnet, dass die stabförmigen Bewegungselemente (9) beidseitig der Materialbahn (16) in zwei parallelen Strängen im Kreis führbar angeordnet sind.

7. Vorrichtung nach Ansprüchen 5 und 6, dadurch gekennzeichnet, dass die Geschwindigkeit der beweglichen Teile allein über die Geschwindigkeit der Rückführungseinrichtungen (7, 7') geregelt wird.

8. Vorrichtungen nach Ansprüchen 5–7, dadurch gekennzeichnet, dass in der Materialableitungszone (C) die untere Rückführungseinrichtung (7) einen längeren Weg ausführt als die obere Mitnahmeeinrichtung (7').

9. Vorrichtung nach Ansprüchen 5–8, dadurch gekennzeichnet, dass in der Materialableitungszone (C) die Mitnehmerkränze (11) paarweise verschiedene Umlaufgeschwindigkeit aufweisen.

10. Vorrichtung nach Ansprüchen 5–9, dadurch gekennzeichnet, dass der Abstand der im Verformungsbereich (A) gegenüberstehenden Werkzeuge (12, 12') veränderlich ist und ihre Konvergenz am Materialeingang (D) durch den veränderlichen Eingangswinkel (d) geregelt werden kann.

11. Vorrichtung nach Ansprüchen 5–10, dadurch gekennzeichnet, dass die Geschwindigkeit der Werkzeuge (12, 12') im Bereich der schneller möglichen Rückführung in der Ableitungszone (c) erheblich über derjenigen der Werkzeuge im Bereich des Materialeinganges (D), der Verformungszone (A) und der Kühl- bzw. Beruhigungszone (B) liegt.

12. Vorrichtung nach Ansprüchen 5–11, dadurch gekennzeichnet, dass die Werkzeuge (12, 12') bei der Rückführung von (C) nach (D) gekühlt oder erwärmt werden können.

13. Vorrichtung nach Ansprüchen 5–12, dadurch gekennzeichnet, dass die Kontrolle der Hochführung der Werkzeuge (12, 12') in der Ableitungszone (C) durch Zwangswege erfolgt, die an Führungsstücken (Zapfen, Lager bzw. Mitnehmernocken) (30, 31) angreifen.

14. Vorrichtung nach Ansprüchen 5–13, dadurch gekennzeichnet, dass der Eingangswinkel (d) mit nicht geraden Schenkeln ausgebildet ist und die Variation der vertikalen Eindringgeschwindigkeit durch die Führungsstücke (30, 31) erfolgt.

15. Vorrichtung nach Ansprüchen 13 oder 14, dadurch gekennzeichnet, dass die Führungsstücke (30, 31) zur Variierung der Verformungsstrecke (A) und der Eindringgeschwindigkeit der Werkzeuge austauschbar sind.

16. Vorrichtung nach Ansprüchen 5–15, dadurch gekennzeichnet, dass die Werkzeuge (12, 12') so angeordnet sind, dass die Profile (22) quer zur Materialbahn (16) in fortlaufenden Reihen ausgebildet werden.

17. Vorrichtung nach Anspruch 16, dadurch gekennzeichnet, dass die stiftförmigen Werkzeuge (12, 12') so angeordnet sind, dass die Reihen der Profile (22) abwechselnd nach oben oder unten, mit Bezug zur Ebene der Materialbahn (16), ausgebildet sind.

18. Vorrichtung nach Ansprüchen 5–17, dadurch gekennzeichnet, dass die stiftförmigen Werkzeuge (12, 12') so angeordnet sind, dass die Profile (22) versetzt zueinander ausgebildet sind.

19. Vorrichtung nach Ansprüchen 5–18, dadurch gekennzeichnet, dass die stiftförmigen Werkzeuge (12, 12') so angeordnet sind, dass die Profile (22) mit unterschiedlicher Länge ausgebildet werden.

20. Vorrichtung nach Ansprüchen 5–19, dadurch gekennzeichnet, dass die stiftförmigen Werkzeuge (12, 12') so angeordnet sind, dass lange und weniger lange Profile (22) abwechselnd einzeln oder in Gruppen ausgebildet werden.

21. Vorrichtung nach Ansprüchen 5–20, dadurch gekennzeichnet, dass die stiftförmigen Werkzeuge (12, 12') zylindrische Konfigurationen mit ebener Endfläche aufweisen.

22. Vorrichtung nach Ansprüchen 5–21, dadurch gekennzeichnet, dass die Endflächen der stiftförmigen Werkzeuge (12, 12') konkav ausgebildet sind.

23. Vorrichtung nach Ansprüchen 5–22, dadurch gekennzeichnet, dass die Endbereiche der stiftförmigen Werkzeuge (12, 12') am äusseren Umfang abgeschrägt sind.

24. Vorrichtung nach einem der Ansprüche 5–23, dadurch gekennzeichnet, dass die stiftförmigen Werkzeuge (12, 12') so angeordnet sind, dass die Profile (22) eine von der im Winkel von 90° zur Materialebene gebildete Normalausrichtung abweichende Richtung aufweisen.

**Claims**

1. Process for formation of a number of hollow profiles joined to one another at the base (22) on a continuous length (16) of material with thermoplastic softening behaviour, whereby the material is exposed to pin-shaped forming tools (12, 12') located vertically in relation to the material plane, employing a device (2) for heating up the material to a temperature of sufficient plasticizability, using top and/or bottom driver devices (7', 7'', 9, 11) located in a circle by drive elements for a number of interchangeable box or plate-shaped support elements (6, 6') matched to the material width, gripped and moved at both ends by the driver devices via support and roller elements fitted at the ends and underneath, for location of a number of pin-shaped forming tools (12, 12'), characterized by the fact that the support elements (6, 6') have cylindrical stub-shaped pivots, dogs or studs (7, 25, 26, 27, 28) projecting on both sides, with which engage rod-shaped driver elements (9) moved about vertical axes of rotation (for the purpose of parallel alignment of the support elements (6, 6') which under pressure operate in opposition to one another or approach one another vertically and horizontally), which are used for horizontal advance of the support elements (6, 6') until they engage with a driver rim (11), by means of which the support elements (6, 6') are moved into operating position at the material infeed (D) by change of direction, employing several spindles (10) to adjust the depth of penetration of the forming tools, particularly in the region of the material infeed and take-off zones (D, C), whereby the speeds of the drive elements for the return devices (7', 7''), the rod-shaped driver elements (9) and the driver rims (11), as well as for the continuously operating spindles (10) are regulated and matched to one another.

2. Process in accordance with claim 1, characterized by the fact that the size of the entry angle is 5 to 45°, and in particular 20 to 30°.

3. Process in accordance with claims 1–2, characterized by the fact that the tools act simultaneously from both sides on the centrally located, prestressed material.

4. Process in accordance with claims 1–2, characterized by the fact that for formation of a number of profiles shaped from the continuous length of material on one side, the length of material is passed on one side over a supporting multiple mesh grille, net or perforated plate with a mesh size or number of holes corresponding at least to the number of pin-shaped forming tools, and that the pin-shaped forming tools act on the material downwards or upwards.

5. Device for formation of a number of hollow profiles (22) joined to one another at the base on a continuous length (16) of material with thermoplastic softening behaviour, whereby the material is exposed to pin-shaped forming tools (12, 12') located vertically in relation to the material plane, with a device (2) for heating the material up to a temperature of sufficient plasticizability, with top and/or bottom driver devices (7', 7'', 9, 11) located in a circle by drive elements for a number of interchangeable box or plate-shaped support elements (6, 6'), matched to the material width, gripped and moved at both ends by the driver devices via support and roller elements fitted at the ends and underneath, for location of a number of pin-shaped forming tools (12, 12'), characterized by the fact that the support elements (6, 6') have cylindrical stub-shaped pivots, dogs or studs (7, 25, 26, 27, 28) on both sides, with which engage rod-shaped driver devices (9) moved about vertical axes of rotation for the purpose of parallel alignment of the support elements (6, 6') operating under pressure in opposition to one another or moving towards one another vertically and horizontally, which are used for horizontal advance of support elements (6, 6') until they engage with a driver rim (11), by means of which the support elements (6, 6') change direction and are moved into operating position at the material infeed (D), with several spindles (10) to adjust the depth of penetration of the forming tools (12, 12'), particularly in the region of the material infeed and take-off zones (D, C), whereby the speeds of the drive elements for the return devices (7', 7''), the rod-shaped driver elements (9) and the driver rims (11), as well as for the continuously operating spindles (10) can be regulated and matched to one another.

6. Device in accordance with claim 5, characterized by the fact that the rod-shaped driver devices (9) are located on both sides of the length of material (16) in two parallel groups and are movable in circular motion.

7. Device in accordance with claims 5 and 6, characterized by the fact that the speed of the moving parts is regulated solely through the speed of the return devices (7, 7').

8. Device in accordance with claims 5–7, characterized by the fact that in the material take-off zone (C) the bottom return device (7) travels further than the top driver device (7').

9. Device in accordance with claims 5–8, characterized by the fact that in the material take-off zone (C) the driver rims (11) in pairs have different peripheral speeds.

10. Device in accordance with claims 5–9, characterized by the fact that the distance between the opposite tools (12, 12') in the forming area A is variable and that their convergence at the material infeed (D) can be regulated by means of the variable entry angle (d).

11. Device in accordance with claims 5–10, characterized by the fact that the speed of the tools (12, 12') in the region of the rapid possible return in the take-off zone (C) is considerably greater than that of the tools in the region of the material infeed (D), of the forming zone (A) and of the cooling or setting zone (B).

12. Device in accordance with claims 5–11, characterized by the fact that the tools (12, 12') can be cooled or heated during return from (C) to (D).

13. Device in accordance with claims 5–12, characterized by the fact that control of the rise of the tools (12, 12') in the take-off zone (C) is effected by means of positive action tracks which act on guide elements (30, 31) (studs, pivots, drive dogs).

14. Device in accordance with claims 5–13, characterized by the fact that the entry angle (d) is formed with limbs which are not straight and that variation of the vertical speed of penetration is effected by guide elements (30, 31).

15. Device in accordance with claims 13 or 14, characterized by the fact that the guide elements (30, 31) can be changed to vary the forming zone (A) and the speed of penetration of the tools.

16. Device in accordance with claims 5–15, characterized by the fact that the tools (12, 12') are positioned so that the profiles (22) are formed at right angles to the length of material (16) in continuous rows.

17. Device in accordance with claim 16, characterized by the fact that the pin-shaped tools (12, 12') are positioned so that the rows of profiles (22) are formed alternately on top or underneath in relation to the plane of the length of material (16).

18. Device in accordance with claims 5–17, characterized by the fact that the pin-shaped tools (12, 12') are positioned so that the profiles (22) are staggered when formed.

19. Device in accordance with claims 5–18, characterized by the fact that the pin-shaped tools (12, 12') are positioned so that the profiles (22) can be formed with different lengths.

20. Device in accordance with claims 5–19, characterized by the fact that the pin-shaped tools (12, 12') are positioned so that long and shorter profiles (22) can be formed alternately, singly or in groups.

21. Device in accordance with claims 5–20, characterized by the fact that the pin-shaped tools (12, 12') are of cylindrical configuration with flat end face.

22. Device in accordance with claims 5–21, characterized by the fact that the end faces of the pin-shaped tools (12, 12') are concave.

23. Device in accordance with claims 5–22, characterized by the fact that the end sections of the pin-shaped tools (12, 12') are chamfered on their outer circumference.

24. Device in accordance with one of claims 5–23, characterized by the fact that the pin-shaped tools (12, 12') are positioned so that the profiles (22) have a direction deviating from the normal alignment formed at an angle of 90° in relation to the material plane.

**Revendications**

1. Procédé permettant la réalisation d'un nombre multiple de profils creux (22) reliés ensemble à leur base, sur une bande (16) constituée d'une matière à effet de ramollissement thermoplastique, cette matière étant soumise à l'action d'outils en forme de broche (12, 12') guidés dans le sens vertical par rapport au plan de la bande de matière, pendant qu'un dispositif (2) de réchauffement porte la matière à une température suffisante pour en assurer la déformabilité thermoplastique. Des dispositifs d'entraînement supérieurs et/ou inférieurs (7', 7'', 9, 11), étudiés pour recevoir un grand nombre de porte-outils (6, 6') échangeables, adaptés à la largeur de bande, se déplacent en circuit fermé par l'action d'éléments moteurs. Aux deux extrémités des dispositifs d'entraînement, des éléments support et des éléments à rouleaux fixés en bout et en-dessous permettent de saisir et de mouvoir les porte-outils (6, 6') réalisés en forme de caisson ou de plateau et destinés à recevoir un nombre multiple d'outils de profilage en forme de broche (12, 12'). Le procédé est caractérisé par le fait que les porte-outils (6, 6') présentent, disposés sur deux de leurs côtés, des paliers, saillies ou axes, notamment en forme de cylindre tronqué (7, 25, 26, 27, 28) dans lesquels viennent s'engrener des éléments mobiles en forme de barres (9) tournant autour d'un axe vertical, dont le but est d'assurer d'une part le parallélisme des porte-outils (6, 6') soumis à des efforts antagonistes, c'est-à-dire se rapprochant mutuellement en sens vertical et horizontal, et d'autre part l'acheminement horizontal des porte-outils (6, 6') jusqu'à leur reprise par une couronne d'entraînement (11) qui, par un changement directionnel, amène les porte-outils (6, 6') dans leur position de travail à l'entrée de la bande de matière (D), l'utilisation de plusieurs vis (10) permettant de régler la profondeur de pénétration des outils de profilage, en particulier dans les zones d'entrée et de sortie de la bande de matière (D, C); les vitesses respectives des éléments moteurs qui commandent les dispositifs de retour (7', 7''), les éléments mobiles en forme de barres (9) et les couronnes d'entraînement (11), ainsi que les vis à action progressive (10) sont synchronisées et asservies entre elles.

2. Procédé suivant la spécification n° 1, caractérisé par le fait que la grandeur de l'angle d'entrée est comprise entre 5 et 45°, en particulier entre 20 et 30°.

3. Procédé suivant les spécifications n° 1 et 2, caractérisé par le fait que l'action des outils s'exerce simultanément sur les deux faces de la bande de matière qui est guidée en son centre et prétendue.

4. Procédé suivant les spécifications n° 1 et 2, caractérisé par le fait que la réalisation d'un nombre multiple de profils formés sur une seule face de la bande de matière s'effectue en faisant passer la bande avec l'une de ses faces sur une grille, un filet multimailles ou une tôle perforée faisant support et ayant un nombre de mailles ou de trous correspondant au minimum au nombre des outils en forme de broche, et que l'action des outils en forme de broche s'exerce soit de haut en bas, soit de bas en haut.

5. Dispositif pour la réalisation d'un nombre multiple de profils creux (22) reliés ensemble à leur base, sur une bande (16) constituée d'une matière à effet de ramollissement thermoplastique, cette matière étant soumise à l'action d'outils en forme de broche (12, 12') guidés dans le sens vertical par rapport au plan de la bande de matière. L'équipement comprend un dispositif (2) permettant de réchauffer la matière à une température suffisante pour en assurer la déformabilité thermoplastique et des dispositifs d'entraînement supérieurs et/ou inférieurs (7', 7'', 9, 11), se déplaçant en circuit fermé par l'action d'éléments moteurs et étudiés pour recevoir un grand nombre de porte-outils (6, 6') échangeables, adaptés à la largeur de bande. Aux deux extrémités des dispositifs d'entraînement, des éléments support et des éléments à rouleaux fixés en bout et en-dessous permettent de saisir et de mouvoir les porte-outils (6, 6') réalisés en forme de caisson ou de plateau et destinés à recevoir un nombre multiple d'outils de profilage en forme de broche (12, 12'). Le dispositif est caractérisé par le fait que les porte-outils (6, 6') présentent, disposés sur deux de leurs côtés, des paliers, saillies ou axes, notamment en forme de cylindre tronqué (7, 25, 26, 27, 28) dans lesquels viennent s'engrener des éléments mobiles en forme de barres (9) tournant autour d'un axe vertical, dont le but est d'assurer d'une part le parallélisme des porte-outils (6, 6') soumis à des efforts antagonistes, c'est-à-dire, se rapprochant mutuellement en sens vertical et horizontal, et d'autre part l'acheminement horizontal des porte-outils (6, 6') jusqu'à leur reprise par une couronne d'entraînement (11) qui, par un changement directionnel, amène les porte-outils (6, 6') dans leur position de travail à l'entrée de la bande de matière (D). L'équipement comprend également plusieurs vis (10) permettant de régler la profondeur de pénétration des outils de profilage, en particulier dans les zones d'entrée et de sortie de la bande de matière (D, C), les vitesses respectives des éléments moteurs qui commandent les dispositifs de retour (7, 7'), les éléments mobiles en forme de barres (9) et les couronnes d'entraînement (11), ainsi que la rotation des vis à action progressive (10), pouvant être synchronisées et asservies entre elles.

6. Dispositif suivant la spécification n° 5, caractérisé par le fait que les éléments mobiles en forme de barres (9) sont disposés sur les deux faces de la bande de matière (16) en deux faisceaux parallèles pouvant être guidés en circuit fermé.

7. Dispositif suivant les spécifications n° 5 et 6, caractérisé par le fait que le réglage de vitesse des parties mobiles s'effectue par la seule vitesse des dispositifs de retour (7, 7').

8. Dispositif suivant les spécifications n° 5 à 7, caractérisé par le fait que dans la zone de sortie de matière (C) le dispositif de retour inférieur (7) effectue un parcours plus long que le dispositif d'entraînement supérieur (7').

9. Dispositif suivant les spécifications n° 5 à 8, caractérisé par le fait que dans la zone de sortie de matière (C) les couronnes d'entraînement (11) présentent des vitesses de rotation différentes pour chacun des groupes jumelés.

10. Dispositif suivant les spécifications n° 5 à 9, caractérisé par le fait que l'écart entre les outils (12, 12') se faisant face dans la zone de travail (A) est variable et que leur convergence à l'entrée de la bande de matière (D) peut être réglée par variation de l'angle d'entrée (d).

11. Dispositif suivant les spécifications n° 5 à 10, caractérisé par le fait que dans la zone de sortie (C), à l'endroit permettant un retour plus rapide, la vitesse des outils (12, 12') est nettement supérieure à celle des outils passant dans la zone d'entrée de matière (D), dans la zone de travail (A) et dans la zone de refroidissement ou de stabilisation (B).

12. Dispositif suivant les spécifications n° 5 à 11, caractérisé par le fait que lors de leur retour de (C) à (D), les outils (12, 12') peuvent être refroidis ou réchauffés.

13. Dispositif suivant les spécifications n° 5 à 12, caractérisé par le fait que le contrôle de la montée des outils (12, 12') dans la zone de sortie (C) s'effectue au moyen de passages forcés, délimités par des pièces de guidage (tenons, paliers ou cames d'entraînement) (30, 31).

14. Dispositif suivant les spécifications n° 5 à 13, caractérisé par le fait que l'angle d'entrée (d) est formé de côtés non droits et que la variation de la vitesse de pénétration verticale s'obtient par l'intervention des pièces de guidage (30, 31).

15. Dispositif suivant les spécifications n° 13 ou 14, caractérisé par le fait que les pièces de guidage (30, 31) permettent de varier le parcours de travail (A) et la vitesse de pénétration des outils sont échangeables.

16. Dispositif suivant les spécifications n° 5 à 15, caractérisé par le fait que les outils (12, 12') sont disposés de telle manière que les profils (22) sont formés transversalement par rapport à la bande de matière (16), en rangées continues.

17. Dispositif suivant la spécification n° 16, caractérisé par le fait que les outils en forme de broche (12, 12') sont disposés de manière à orienter les rangées de profils (22) alternativement vers le haut ou vers le bas par rapport au plan de la bande de matière (16).

18. Dispositif suivant les spécifications n° 5 à 17, caractérisé par le fait que les outils en forme de broche (12, 12') sont disposés de manière à former des profils (22) décalés les uns par rapport aux autres.

19. Dispositif suivant les spécifications n° 5 à 18, caractérisé par le fait que les outils en forme de broche (12, 12') sont disposés de manière à former des profils (22) de différentes longueurs.

20. Dispositif suivant les spécifications n° 5 à 19, caractérisé par le fait que les outils en forme de broche (12, 12') sont disposés de manière à former des profils (22) plus ou moins longs, les longueurs alternant une par une ou par groupes.

21. Dispositif suivant les spécifications n° 5 à 20, caractérisé par le fait que les outils en forme de broche (12, 12') présentent des configurations cylindriques à surface terminale plane.

22. Dispositif suivant les spécifications n° 5 à 21, caractérisé par le fait que les surfaces terminales des outils en forme de broche (12, 12') sont des surfaces concaves.

23. Dispositif suivant les spécifications n° 5 à 22, caractérisé par le fait que les zones terminales des outils en forme de broche (12, 12') sont chanfreinées sur leur pourtour extérieur.

24. Dispositif suivant l'une des spécifications n° 5 à 23, caractérisé par le fait que les outils en forme de broche (12, 12') sont disposés de telle manière que les profils (22) présentent une orientation s'écartant de l'orientation normale qui consiste à former un angle de 90° par rapport au plan de la bande de matière.

Fig. 1

Fig.2

Fig. 3

Fig.4

Fig.5

*Fig.6*

*Fig.7*

Fig. 9

Fig. 8

0 039 847

Fig·10

Fig. 11

Fig.12

Fig.13

*Fig.14*

a

b

c

d

a     b     c

*Fig. 15*